Europäisches Patentamt

European Patent Office

Office européen des brevets

(11) Publication number: **0 194 020**
**B1**

(12) **EUROPEAN PATENT SPECIFICATION**

(45) Date of publication of patent specification: **25.07.90**

(51) Int. Cl.⁵: **F 16 B 11/00, B 23 K 1/00**

(21) Application number: **86300626.8**

(22) Date of filing: **30.01.86**

(54) A fitting.

(30) Priority: **31.01.85 IE 1967/84**

(43) Date of publication of application:
**10.09.86 Bulletin 86/37**

(45) Publication of the grant of the patent:
**25.07.90 Bulletin 90/30**

(84) Designated Contracting States:
**AT CH DE FR GB IT LI LU NL SE**

(56) References cited:
**BE-A- 552 394**
**DE-C- 113 590**
**GB-A- 865 472**
**US-A-2 880 021**

**PATENTS ABSTRACTS OF JAPAN, vol. 7, no.
179, (M-234) (1324), August 1983**

(73) Proprietor: **KEELGLEN LIMITED
9 The Parade
Kilkenny County Kilkenny (IE)**

(72) Inventor: **Jackman, John Christopher
9 The Ring
Bennettsbridge County Kilkenny (IE)**

(74) Representative: **Opperman, Stuart Richard et al
Haseltine Lake & Co. Hazlitt House 28
Southampton Buildings Chancery Lane
London WC2A 1AT (GB)**

Courier Press, Leamington Spa, England.

## Description

The present invention relates to a connecting device which facilitates the assembly of structures such as furniture, scaffolding, and display stands from lengths of elongate elements, such as tubing.

The assembly of such structures using metal tubing, has been done by welding the lengths together at the junctions. Welding the ends of tubing together to form a junction presents difficulties. One difficulty is that the piping or tubing may collapse inwardly during welding. Another difficulty is that the appearance of the junction may be unsatisfactory. A further difficulty is that welding is time consuming and expensive.

Japanese Patent Specification No. 58—81559(A) entitled "Joining method of shaft member to fitting member" discloses a fitting for connecting to a shaft member. The fitting comprises a cylindrical member having a semicircular groove in the centre part of the inner circumferential surface. The groove is packed with a brazing filler material so that, upon application of heat, the fitting will be joined to the shaft member at high strength. The molten brazing filler material penetrates by gravity or capillary action into the right and left axial directions of the shaft member and penetrates into the remaining inner area of the cylindrical fitting member.

German Patent Specification No. 113 590 entitled "Method of connecting of frame members" discloses a method of connecting frame-tubes in which the connecting sections are provided with co-operating, semi-circular or flat profiled grooves into each of which is fitted a solid filling piece made of metal fusible at between 100 to 400°C, such as for example tin. The tubes are then fused together by application of heat to form a permanent strong connection between the connecting sections and the tubes.

The disadvantages associated with the above prior art connecting devices is that they cannot be used to join elements of different materials.

It is an object of the present invention to provide a connecting device which represents an improvement over the known devices.

The present invention provides a connecting device for connection to at least one elongate element to form a structure, the connecting device comprising at least one connector member having a portion sized to engage with the elongate element, the portion having at least one recess in a surface for mating with a surface on the elongate element; and a bonding insert mechanically fixable in the recess and proportioned to be held in the recess by the mating surface of the elongate member; characterised in that the bonding insert includes a base made of material compatible with the material of the elongate element and an upper layer of a bonding medium disposed on the base; whereby upon application of heat to the portion of the connector member and elongate element, the bonding medium bonds the base of the bonding insert to the surface of the elongate element.

The bonding medium may be an adhesive or solder.

The invention will now be more particularly described with reference to the accompanying drawings which show by way of example only, a number of embodiments according to the invention. In the drawings:

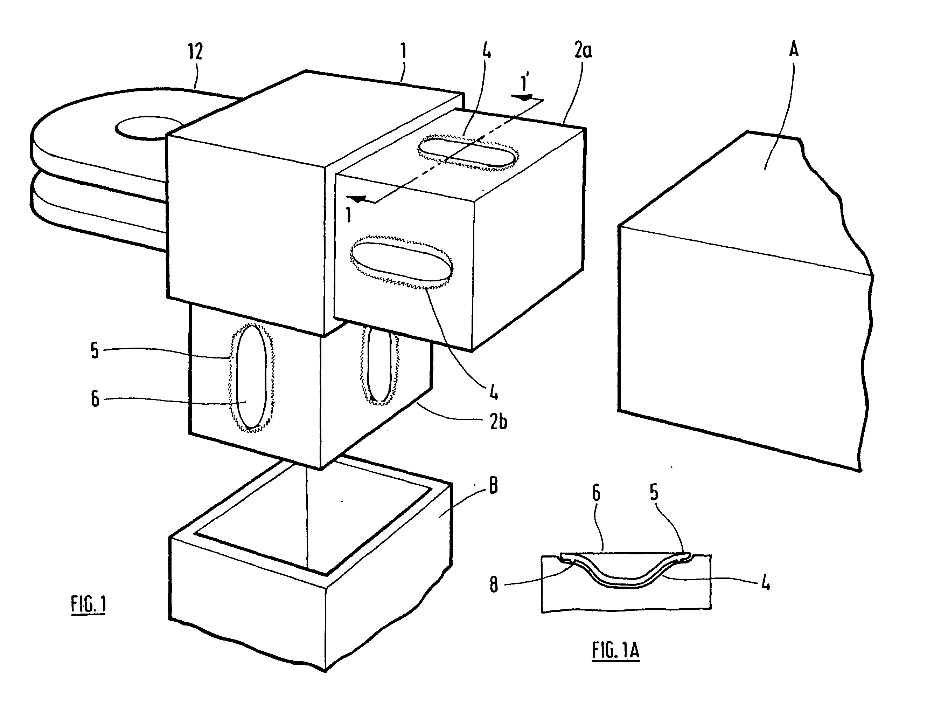

Figure 1 is a perspective view of a first device for use in joining two mutually perpendicular square cross-section tubes, and including a hinge;

Figure Ia is a section view on 1—1' of Figure 1;

Figure 2 is a partially exploded perspective view of a second device including bonding inserts, for joining one end of a square cross-section tube at right angles to a round cross-section pipe intermediate the ends of the pipe;

Figure 3 is a perspective view of a third device showing one end of the device, and an insert, the device being an external fitting, i.e. the end of the fitting is placed over the end of the tubing, and

Figure 4 is a perspective view of a fourth device for joining tubing.

Referring initially to Figure 1, the first device comprised a connector member 1, manufactured as a single aluminium alloy casting and including legs 2a and 2b which fit into mild steel tubes A and B. The legs 2a, 2b are provided with recesses 4 for receiving bonding inserts 5 which contain solder 6. The bonding inserts 5 are of the same material as the tubes A and B. The ends of square section tubes A and B may each be fitted over the legs 2a, 2b so that their respective end edges abut the shoulder defined by the body 1 and legs 2a, 2b. Heat is then applied by means of a blow torch to the external surface of the tubes A and B in the region of the legs 2a, 2b, causing the solder 6 to melt thereby bonding the inserts 5 to the tubes A and B. In the drawings of the first embodiment, it will be noted that the edges of the inserts 5 are serrated. The serrations engage the side walls of the recess 4 to assist in locating the inserts 5 and may be used to rivet the inserts in position when the fittings are used in high stress applications. In normal light engineering applications, however, a press fit of the inserts 5 into the recesses 4 will provide sufficient anchorage of the inserts 5 in the recesses 4.

Referring now to Figure Ia, it will be noted that the insert 5 is provided with resiliently deformable dimples 8. The dimples 8 cause the insert 5 and solder 6 to stand just proud of the surface of the legs 2a, 2b, so that when the tubes A and B are put in position, a good contact is achieved between the solder 6 and the tubes.

The provision of a fitment in the form of part of a hinge 12 on the body 1 illustrates just one of the number of uses to which the devices may be put.

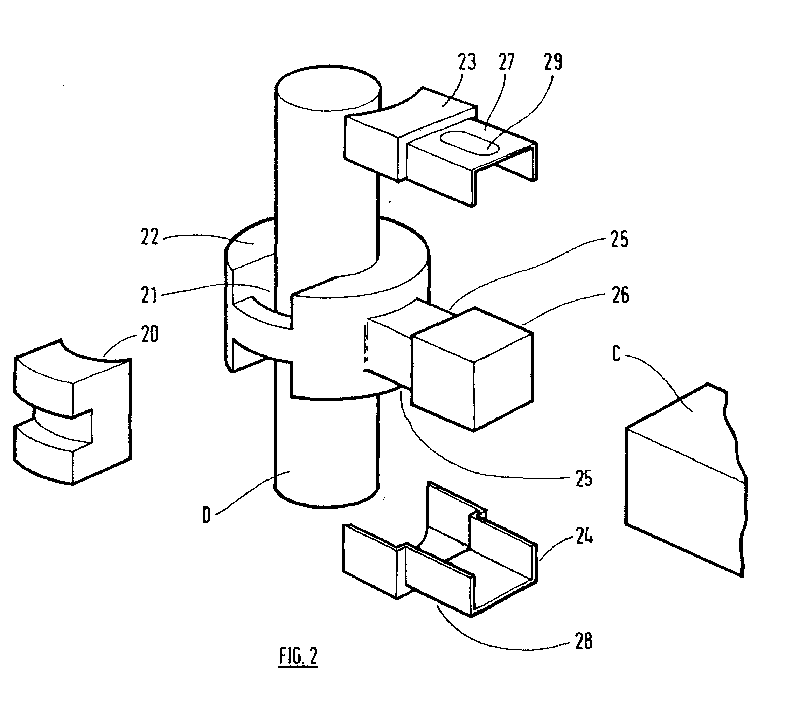

The second embodiment is illustrated in Figure 2. One end of a horizontally extending square cross sectional tube C is to be joined to a vertically extending round cross sectional pipe D, intermediate the ends of the pipe D. As the pipe D is manufactured from mild steel, a mild steel insert 20 is first inserted into the recess 21 provided on a cast iron collar 22. The collar 22 is fitted over one end of pipe D and is moved along the pipe member to the desired position and the insert 20 is welded to the pipe D.

Inserts 23, 24 containing solder 29 are then put on position in recesses 25, the horizontal tube C is slid over the leg 26 and partially over inserts 23, 24 to abut shoulders 27, 28 on the inserts. Heat is then applied to join the horizontal tube C to the inserts 23, 24.

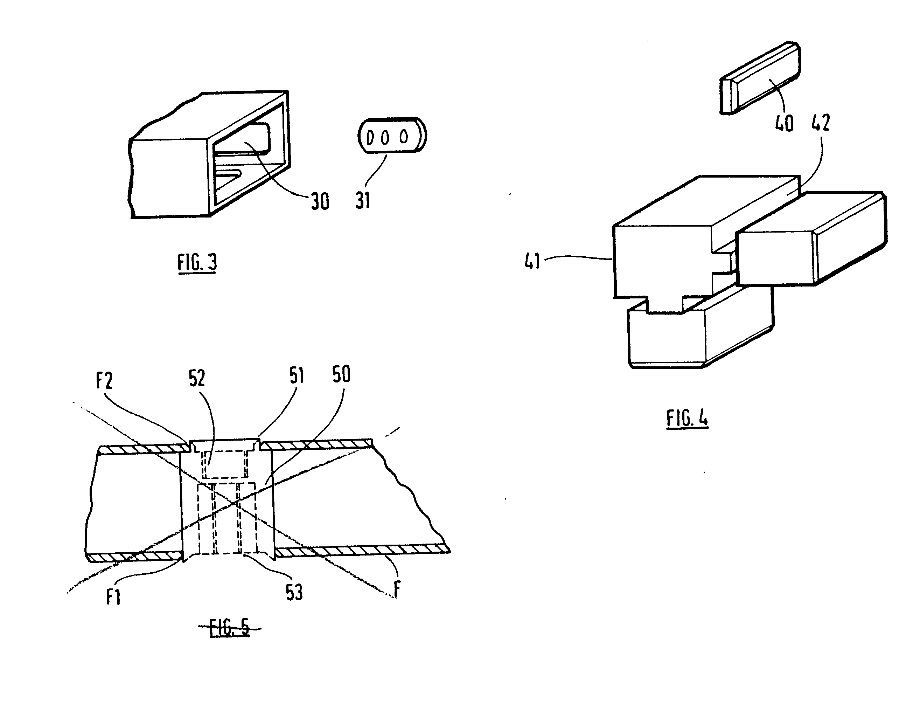

The third embodiment illustrated in Figure 3 illustrates one end of a device which fits over a tube. Each internal recess 30 accommodates a bonding insert 31.

The fourth embodiment illustrated in Figure 4 is a further example of a device in which the inserts 40 are welded to the tubes. The inserts 40 are retained on the body 41 in slots 42.

The devices described in this specification and the elongate elements may be of metal, plastics or ceramic material.

Instead of using solder in the bonding inserts, a heat curing adhesive may also be used as a bonding medium. A suitable adhesive is a two part epoxy resin, an example of which is sold under the Trade Mark ARALDITE.

**Claims**

1. A connecting device for connection to at least one elongate element (A; B; C; D) to form a structure, the connecting device comprising at least one connector member (I; 22; 41) having a portion (2a, 2b; 26) sized to engage with the elongate element, the portion having at least one recess (4; 25; 30; 42) in a surface for mating with a surface on the elongate element; and a bonding insert (5; 23; 24; 31; 40) mechanically fixable in the recess and proportioned to be held in the recess by the mating surface of the elongate member; characterised in that the bonding insert (5; 23; 24; 31; 40) includes a base made of material compatible with the material of the elongate element and an upper layer (6, 29) of a bonding medium disposed on the base; whereby upon application of heat to the portion of the connector member (1; 22; 41) and elongate element (A; B; C; D), the bonding medium bonds the base of the bonding insert to the surface of the elongate element.

2. A connecting device as claimed in claim 1, characterised in that the connector member (22) is sized to engage with a second elongate element (D), the connector member having a recess (21) and a welding insert (20) fixable in the recess (21) and the welding insert being made of a material compatible with the material of the second elongate element (D) and being weldable thereto.

3. A connecting device as claimed in Claim 1 or Claim 2, characterised in that the bonding medium is an adhesive.

4. A connecting device as claimed in Claim 1 or Claim 2, characterised in that the bonding medium is a solder.

5. A connecting device as claimed in Claim 1 or Claim 2, characterised in that the bonding insert is a pushfit in the recess.

6. A connecting device as claimed in Claim 1 or Claim 2, characterised in that the bonding insert includes means for mechanically securing said insert in the recess.

7. A connecting device as claimed in Claim 6, characterised in that the means for mechanically securing said insert in the recess includes a plurality of serrations for securing the insert in position.

8. A connecting member as claimed in any one of the preceding claims, characterised in that biasing means are provided to assist in the engagement of the insert with the surface of the elongate element being bonded.

9. A connecting device for connection to at least one elongate element to form a structure, the device comprising a connector member (22) of a material which differs from the material of the elongate element and which is sized to engage with the elongate element, characterised in that the connector member has a recess (21) and a welding insert (20) fixable in the recess, the welding insert being made of a material compatible with the material of the elongate element and being weldable thereto.

**Patentansprüche**

1. Verbindungsvorrichtung zur Verbindung mit wenigstens einem langgestreckten Element (A; B; C; D) zur Bildung einer Struktur, mit wenigstens einem Verbindungsteil (1; 22; 41) mit einem Abschnitt (2a, 2b; 26), der so bemessen ist, daß er mit dem langgestreckten Element in Eingriff bringbar ist und der in einer Oberfläche, die mit einer Oberfläche des langgestreckten Elements in Berührung kommt, wenigstens eine Ausnehmung (4; 25; 30; 42) besitzt, sowie mit einem Bindemittel-Einsatzteil (5; 23; 24; 31; 40), das in der Ausnehmung mechanisch fixierbar ist und so proportioniert ist, daß es von der Gegenfläche des langgestreckten Elements in der Ausnehmung gehalten wird, dadurch gekennzeichnet, daß das Bindemittel-Einsatzteil (5; 23; 24; 31; 40) ein Basisteil aus einem mit dem Werkstoff des langgestreckten Elements kompatiblen Werkstoff und eine auf diesem Basisteil angeordnete obere Schicht (6, 29) aus einem Bindemittel besitzt, wodurch bei Wärmeeinwirkung auf den genannten Abschnitt des Verbindungsteils (1; 22; 41) und das langgestreckte Element (A; B; C; D) das Bindemittel das Basisteil des Bindemitte-Einsatzteils mit der Oberfläche des langgestreckten Elements verbindet.

2. Verbindungsvorrichtung nach Anspruch 1, dadurch gekennzeichnet, daß das Verbindungsteil (22) so bemessen ist, daß es mit einem zweiten langgestreckten Element (D) in Eingriff bringbar ist, und daß das Verbindungsteil eine Ausnehmung (21) und ein in dieser Ausnehmung (21) fixierbares Schweißmittel-Einsatzteil (22) besitzt wobei dieses Schweißmittel-Einsatzteil aus einem mit, dem Werkstoff des zweiten langgestreckten Elements (D) kompatiblen Werkstoff und mit ihm verschweißbaren Werkstoff besteht.

3. Verbindungsvorrichtung nach Anspruch 1 oder 2, dadurch gekennzeichnet, daß das Bindemittel ein Kleber ist.

4. Verbindungsvorrichtung nach Anspruch 1 oder 2, dadurch gekennzeichnet, daß das Bindemittel ein Lötmittel ist.

5. Verbindungsvorrichtung nach Anspruch 1 und 2, dadurch gekennzeichnet, daß das Bindemittel-Einsatzteil durch Preßsitz in der Ausnehmung gehalten ist.

6. Verbindungsvorrichtung nach Anspruch 1 oder 2, dadurch gekennzeichnet, daß das Bindemittel-Einsatzteil Mittel zu seiner mechanischen Befestigung in der Ausnehmung aufweist.

7. Verbindungsvorrichtung nach Anspruch 6, dadurch gekennzeichnet, daß die Mittel zur mechanischen Befestigung eine Mehrzahl von Zähnen sind, mit denen das Einsatzteil in seiner Position sicherbar ist.

8. Verbindungsvorrichtung nach einem der vorhergehenden Ansprüche, dadurch gekennzeichnet, daß Vorspannmittel vorgesehen sind, die die Verbindung des Einsatzteils mit der Oberfläche des zu verbindenden langgestreckten Elements unterstützen.

9. Verbindungsvorrichtung zur Verbindung mit wenigstens einem langgestreckten Element zur Bildung einer Struktur, mit einem Verbindungsteil (22), das aus einem anderen Werkstoff besteht als das langgestreckte Element und so bemessen ist, daß es mit dem langgestreckten Element in Eingriff bringbar ist, dadurch gekennzeichnet, daß das Verbindungsteil eine Ausnehmung (21) und einen in dieser Ausnehmung fixierbaren Schweißeinsatz besitzt, der aus einem mit dem Werkstoff des langgestreckten Elements kompatiblen Werkstoff besteht und mit diesem verschweißbar ist.

**Revendications**

1. Dispositif de connexion pour raccordement à au moins un élément oblong (A; B; C; D) en vue de former une structure, le dispositif de connexion comprenant au moins un organe connecteur (1; 22; 41) ayant une partie (2a, 2b; 26) calibrée pour se mettre en prise avec l'élément oblong, la partie ayant au moins un creux (4; 25; 30; 42) dans une surface pour accouplement avec une surface sur l'élément oblong; et une pièce rapportée de liaison (5; 23; 24; 31; 40) mécaniquement fixable dans le creux et proportionnée en vue d'être maintenue dans le creux par la surface d'accouplement de l'élément oblong;

caractérisé en ce que la pièce rapportée de liaison (5; 23; 24; 31; 40) comporte une base faite de matériau compatible avec le matériau de l'élément oblong et une couche supérieure (6, 29) d'un agent de liaison disposé sur la base; de sorte que lors de l'application de chaleur à la partie de l'organe connecteur (1; 22; 41) et l'élément oblong (A; B; C; D), l'agent de liaison lie la base de la pièce rapportée de liaison à la surface de l'élément oblong.

2. Dispositif de connexion suivant la revendication 1, caractérisé en ce que l'organe connecteur (22) est calibré pour se mettre en prise avec un second élément oblong (D), l'organe connecteur ayant un creux (21) et une pièce rapportée de soudure (20) fixable dans le creux (21), et la pièce rapportée de soudure étant faite d'un matériau compatible avec le matériau du second élément oblong (D) et étant soudable à celui-ci.

3. Dispositif de connexion suivant la revendication 1 ou la revendication 2, caractérisé en ce que l'agent de liaison est un adhésif.

4. Dispositif de connexion suivant la revendication 1 ou la revendication 2, caractérisé en ce que l'agent de liaison est de la soudure.

5. Dispositif de connexion suivant la revendication 1 ou la revendication 2, caractérisé en ce que la pièce rapportée de liaison est une pièce ajustée à force dans le creux.

6. Dispositif de connexion suivant la revendication 1 ou la revendication 2, caractérisé en ce que la pièce rapportée de liaison comprend des moyens pour fixer mécaniquement la pièce de liaison dans le creux.

7. Dispositif de connexion suivant la revendication 6, caractérisé en ce que les moyens pour fixer mécaniquement la pièce rapportée dans le creux comprend une pluralité de dents pour fixer la pièce rapportée en position.

8. Dispositif de connexion suivant l'une quelconque des revendications précédentes, caractérisé en ce que des moyens de décentrement sont prévus pour aider à la mise en contact de la pièce rapportée avec la surface de l'élément oblong devant être lié.

9. Dispositif de connexion pour raccordement à au moins un élément oblong en vue de former une structure, le dispositif comprenant un organe connecteur (22) d'un matériau qui diffère du matériau de l'élément oblong et qui est calibré pour se mettre en prise avec l'élément oblong, caractérisé en ce que l'organe connecteur comporte un creux (21) et une pièce rapportée de soudure (20) fixable dans le creux, la pièce rapportée de soudure étant faite d'un matériau compatible avec le matériau de l'élément oblong et étant soudable à celui-ci.

FIG. 1A

FIG. 1

FIG. 2

FIG. 3

30

31

FIG. 4

41

40

42

F2    52    51    50

F1    53    F

FIG. 5